# EUROPÄISCHE PATENTSCHRIFT

(11) **EP 4 084 962 B1**
(45) Veröffentlichungstag und Bekanntmachung des Hinweises auf die Patenterteilung: **19.02.2025**
(21) Anmeldenummer: 20830067.3
(22) Anmeldetag: 16.12.2020
(51) Int. Cl.: B42D 25/324, B42D 25/373, B42D 25/351, B42D 25/29, B42D 25/425, B42D 25/445, G02B 5/08

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 03.01.2020 DE 102020000030
(43) Veröffentlichungstag der Anmeldung: 09.11.2022
(73) Patentinhaber: Giesecke+Devrient Currency Technology GmbH, 81677 München (DE)
(72) Erfinder: FUHSE, Christian, 83624 Otterfing (DE); SATTLER, Tobias, 83607 Holzkirchen (DE); SCHERER, Kai Herrmann, 82491 Grainau (DE)
(74) Vertreter: Giesecke+Devrient IP
(86) Internationale Anmeldenummer: PCT/EP2020/025579
(87) Internationale Veröffentlichungsnummer: WO 2021/136587

(56) Entgegenhaltungen:
- EP-A1- 3 401 117
- WO-A1-2016/180522
- WO-A1-2019/219239
- WO-A2-2011/066990

## Beschreibung

Die Erfindung betrifft ein optisch variables Sicherheitselement mit einem reflektiven Flächenbereich. Die Erfindung betritt auch ein Verfahren zum Herstellen eines solchen Sicherheitselements sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines Transferpatches ausgebildet sein.

Eine besondere Rolle bei der Echtheitsabsicherung spielen Sicherheitselemente mit betrachtungswinkelabhängigem Erscheinungsbild, da diese selbst mit modernsten Kopiergeräten nicht reproduziert werden können. Das optisch variable Sicherheitselement zeigt Betrachter unter unterschiedlichen Betrachtungswinkeln beispielsweise unterschiedliche Motive oder unterschiedliche Zustände eines bewegten Motivs. Im Stand der Technik sind dabei als optisch variable Effekte beispielsweise Bewegungseffekte oder Motivkippeffekte beschrieben, die mit Hilfe von Hologrammen, Mikrolinsen oder Mikrospiegeln realisiert werden.

Es ist bekannt, verschiedene optisch variable Effekte - auch mittels unterschiedlicher Technologien - in einem Sicherheitselement zu erzeugen.

WO 2011/066991 A2 zeigt einen durch Mikrospiegel erzeugten Bewegungseffekt beim Kippen eines Sicherheitselements. Ein heller Balken bewegt sich über einen Flächenbereich. In dem Dokument wird auch vorgeschlagen, beispielsweise eine Mikrospiegelanordnung und eine Linsenanordnung nebeneinander in einem Sicherheitselement zu kombinieren. Im Flächenbereich der Linsen wird ein erstes - beispielsweise hinter dem Sicherheitselement schwebendes - Motiv sichtbar und im Bereich der Mikrospiegel beispielsweise der Bewegungseffekt sichtbar.

WO 2011/066990 A2 betrifft eine Anordnung von Mikrospiegeln, welche so ausgerichtet sind, dass der Bereich als nicht ebene Fläche sondern gewölbte Fläche wahrgenommen wird. EP 3 401 117 A1 beschreibt ein Sicherheitselement mit einer mikrooptischen Darstellungsanordnung, die eine stereographische Darstellung eines Objektes mit einer absoluten Tiefeninformation und/oder eine orthoparallaktische Darstellung des Objekts ergibt. WO 2016/180522 A1 betrifft ein Sicherheitselement, welches ein über oder unter der Ebene des Sicherheitselements schwebendes Element darstellt.

In einem Flächenbereich mit Mikrospiegeln können Mikrospiegel unterschiedlicher Motive ineinander verschachtelt bereitgestellt werden, insbesondere um beim Kippen einen Motivwechsel in dem Flächenbereich zu erzeugen.

WO 2019/219239 A1 schlägt einen Mikrospiegelbereich vor, in welchem ein Bewegungseffekt eines ersten Motivs mit einem zweiten Motiv kombiniert ist, das nur in einem Betrachtungswinkelbereich erkennbar ist. Das Dokument zeigt den Oberbegriff von Anspruch 1.

Ausgehend davon liegt der Erfindung die Aufgabe zugrunde, die Fälschungssicherheit und die visuelle Attraktivität optisch variabler Sicherheitselemente weiter zu erhöhen, insbesondere sollen dabei auch optisch variable Sicherheitselemente mit zwei oder mehr unterschiedlichen Erscheinungsbildern bzw. Effekten in unterschiedlichen Farben bereitgestellt werden.

Diese Aufgabe wird durch die Merkmale des unabhängigen Anspruchs 1 gelöst. Weiterbildungen der Erfindung sind Gegenstand der abhängigen Ansprüche.

Das erfindungsgemäße optisch variable Sicherheitselement ist in Anspruch 1 definiert.

Für den Betrachter ist in diffusem Licht der Unterschied der Konturschärfe des ersten Sicherheitsmerkmals im Vergleich zu der Konturschärfe des zweiten Sicherheitsmerkmals erkennbar. Selbst wenn es einem Fälscher also gelingen sollte mit anderen Mitteln eine Bewegung mit unscharfen Konturen in diffusem Licht nachzustellen, wird er nicht ohne Weiteres zugleich in diffusem Licht ein nur betrachtungswinkelabhängig sichtbares Element mit erhöhter Konturschärfe darstellen können.

Mit Vorteil wird hier ein Sicherheitselement bereitgestellt, dass einerseits einen für den Betrachter schnell erkennbaren Bewegungseffekt über einen größeren Bereich zeigt. Der Betrachter muss das Sicherheitsmerkmal nicht lange suchen, da es über einen großen Bereich erkennbar ist. Gleichzeitig wird das Sicherheitselement aber auch in diffusem Licht nicht gänzlich unscharf. Weiterhin ist das Sicherheitselement hinsichtlich seiner Fläche optimiert. Die beiden Sicherheitsmerkmale werden nicht nebeneinander (in eigenen Flächen), sondern in einem gemeinsamen Flächenbereich, nämlich insbesondere dem zweiten Flächenbereich bereitgestellt.

Der Größenunterschied der Kippwinkelbereiche ist einer der Faktoren, welche die erhöhte Konturschärfe unterstützen. Der zweite Kippwinkelbereich hat vorzugsweise mindestens die doppelte bzw. besonders vorteilhaft mehr als die vierfache Größe des ersten Kippwinkelbereiches. Im Folgenden werden noch weitere Faktoren genannt, welche einen sichtbaren Unterschied in der Konturschärfe weiter unterstützen.

In vorteilhaften Ausgestaltungen liegt zwischen dem ersten Kippwinkelbereich und einem Bereichskippwinkel, bei welchem das zweite bewegte Sicherheitsmerkmal zumindest teilweise in dem ersten Flächenbereich sichtbar ist, ein (großer) Kippwinkelabstand vor. Der Kippwinkelabstand hat bevorzugt zumindest die dreifache oder sogar zumindest die fünffache Größe des ersten Kippwinkelbereiches. Bei Betrachtung des Sicherheitselements im (entsprechenden) Bereichskippwinkel liegt das zweite Sicherheitselement zumindest teilweise in dem ersten Flächenbereich. Der erste Kippwinkelbereich ist um das genannte Vielfache seiner selbst von dem Bereichskippwinkel entfernt.

Vorzugsweise liegt angrenzend an den ersten Flächenbereich ein Umgebungsbereich vor. In dem ersten Flächenbereich ist das erste Sicherheitsmerkmal nur betrachtungswinkelabhängig sichtbar und unter dem Bereichskippwinkel das zweite Sicherheitsmerkmal sichtbar. In einer Bewegungsrichtung des zweiten Sicherheitsmerkmals weist der Umgebungsbereich mindestens die halbe in der Bewegungsrichtung liegende Größe des ersten Flächenbereiches auf. Im Umgebungsbereich sind alle Mikroreflektoren weder für den ersten Kippwinkelbereich noch für einen in seiner Größe verdreifachten ersten Kippwinkelbereich ausgerichtet. Das zweite Sicherheitsmerkmal bewegt sich (wenn der Kippwinkel in der Nähe des Bereichskippwinkels liegt) auch durch den Umgebungsbereich. Der Umgebungsbereich ist jedoch frei von Mikroreflektoren, beispielsweise des zweiten Sicherheitsmerkmals, welche aufleuchten, wenn der Kippwinkel im ersten Kippwinkelbereich liegt. Die Konturschärfe des ersten Sicherheitsmerkmals bzw. des ersten Flächenbereiches bleibt auch dadurch im diffusen Licht hoch. In Ausgestaltungen hat der Umgebungsbereich minimal die halbe Breite und maximal die Breite des ersten Flächenbereiches. Der Umgebungsbereich grenzt zumindest einseitig, in der Regel beidseitig, an den ersten Flächenbereich an. Besonders vorteilhaft umgibt der Umgebungsbereich den ersten Flächenbereich. Das erste Motiv kann somit beim Kippen plötzlich in dem Umgebungsbereich auftauchen.

Die Konturschärfe im vorliegenden Sinne ist ein Maß für die Erkennbarkeit der Lage der Kontur des Sicherheitsmerkmals. So kann insbesondere die (Außen-)Kontur des für den Betrachter dargestellten Motivs scharf oder unscharf dargestellt sein. Für ein Sicherheitsmerkmal mit hoher Konturschärfe ist die Lage der Kontur des Sicherheitsmerkmals unmittelbar erkennbar. Es gibt eine Kontur, an welcher ein Hell-Dunkel-Übergang (im Idealfall digital) erfolgt. Bei einem Sicherheitsmerkmal mit geringer Konturschärfe verschwimmt dagegen die Kontur des Sicherheitsmerkmals für den Betrachter. Bei geringer Konturschärfe sieht der Betrachter keine definierte Kontur, sondern nur einen Übergangsbereich, in welchem insbesondere ein Übergang von Hell nach Dunkel vorliegt. Für den Betrachter ist die Form des Sicherheitsmerkmals bzw. des dargestellten Motivs erkennbar, aber deren Kontur ist nicht mehr scharf definiert, sondern nur noch abschätzbar.

Die beiden Sicherheitsmerkmale haben - unabhängig davon ob sie als flächiges Motiv oder als linienförmiges Motiv dargestellt sind - eine (Außen-)Kontur vorzugsweise in Form eines Hell-Dunkel-Überganges. Das Motiv der Sicherheitsmerkmale entsteht betrachtungswinkelabhängig durch die vorhandene oder nicht vorhandene (bzw. heller oder weniger hell erscheinende) gerichtete Reflektion an den Mikroreflektoren. Für den Betrachter tritt das Sicherheitsmerkmal also hell reflektierend, vorzugsweise farblich hell reflektierend, in Erscheinung. Der angrenzende Bereich oder Umgebungsbereich ist dagegen dunkel, insbesondere da die Mikroreflektoren in andere Richtungen ausgerichtet sind.

Die Mikroreflektoren sind parallel zu (oder in) der Ebene des Sicherheitselements angeordnet. Der Bewegungseffekt des zweiten Sicherheitsmerkmals verläuft ebenfalls parallel zu bzw. in der Ebene des Sicherheitselements. Die Ausrichtung der Mikroreflektoren kann durch einen Neigungswinkel und einen Azimutwinkel angegeben werden, wie sie in der bevorzugten Ausgestaltung von Mikrospiegeln als Mikroreflektoren vorliegen. Der Neigungswinkel des Mikroreflektors gegenüber der Ebene des Sicherheitselements ist für das Kippen um eine vorgegeben Achse der entscheidende Parameter. Vereinfacht wirken beim Kippen nur die Mikroreflektoren, deren Azimutwinkel in Richtung des Betrachters liegen.

Motive von Sicherheitsmerkmalen, die mit gerichteten Mikrospiegeln erzeugt werden, sind in der Regel ausgelegt für gerichtetes Licht. Gerichtete Lichtquellen sind beispielsweise die Sonne oder Punktlichtquellen. Diffuses Licht entsteht dagegen bei bewölktem Himmel oder beispielsweise durch großflächige (z.B. Leuchtstofflampen oder LED) Leuchten, insbesondere bei kleineren Abständen, oder durch indirekte Beleuchtung. Für viele attraktive Sicherheitsmerkmale, wie Bewegungseffekte, dreidimensionale Effekte oder Motivwechsel, werden Mikrospiegel verwendet, die auf kurzen Abständen jeweils nur leicht unterschiedlich ausgerichtet sind. Im diffusen Licht sinkt in der Regel die Erkennbarkeit des Effektes, wenn keine Gegenmaßnahmen verfügbar sind. Für bewegte Motive bleibt die Bewegung des Motivs auch im diffusen Licht gut erhalten, lediglich die Konturschärfe des bewegten Motivs sinkt erkennbar. Das Motiv hat keine klare Kontur mehr. Vereinfacht leuchten beispielsweise auch benachbarte Mikroreflektoren bereits auf, die eigentlich erst den späteren Kippwinkeln des bewegten Motivs zugeordnet sind. Das zweite Sicherheitsmerkmal ist also besonders vorteilhaft, da der Betrachter im diffusen Licht weiterhin den Bewegungseffekt des Motivs sieht und zugleich die verringerte Konturschärfe erkennen kann. Durch den im diffusen Licht vorhandenen Unterschied in der Konturschärfe der beiden Sicherheitsmerkmale könnte der Betrachter angeregt werden, auch den Unterschied der Konturschärfe des Motivs des zweiten Sicherheitsmerkmals zwischen diffusem und gerichteten Licht zu prüfen. Gleichzeitig wird eine Fälschung mit völlig unscharfen Motiven erschwert, da auch in diffusem Licht stets mindestens eines der Motive mit scharfer Kontur erscheinen muss.

Die hier genannten Kippwinkelangaben und abgeleiteten Größen, wie Kippwinkelbereiche und -abstände und insbesondere deren Verhältnisse, werden im gerichteten Licht gemessen bzw. bestimmt - soweit keine abweichenden Angaben erfolgen.

Besonders vorteilhaft ist es, wenn das Motiv des ersten Sicherheitsmerkmals und das Motiv des zweiten Sicherheitsmerkmals mit unterschiedlicher Farbwirkung in Erscheinung treten. Das Motiv des ersten Sicherheitsmerkmals sieht der Betrachter in einer ersten Farbe. Das bewegte Motiv des zweiten Sicherheitsmerkmals sieht der Betrachter dagegen in einer (anderen) zweiten Farbe. Die Farbe des Motivs ist vorliegend vorzugsweise kippwinkelunabhängig. Das Motiv (der Sicherheitsmerkmale) zeigt die genannte Farbe (jeweils) in seinem Kippwinkelbereich. Soweit in der vorliegenden Anmeldung vereinfacht von Farbe bzw. unterschiedlicher Farbe gesprochen wird, sind Farbtöne bzw. unterschiedliche Farbtöne gemeint (also keine ggf. unterschiedlichen Helligkeitswerte).

Die Mikroreflektoren des ersten und/oder des zweiten Sicherheitsmerkmals weisen jeweils eine farbgebende Beschichtung oder eine farbgebende Struktur auf.

Die Mikroreflektoren weisen in der Regel eine reflektionserhöhende Beschichtung (beispielsweise metallische Beschichtung) auf. Die reflektionserhöhende Beschichtung kann eine Eigenfarbe haben, also zugleich als farbgebende Beschichtung fungieren. Ebenso kann die reflektionserhöhende Beschichtung eine - z.B. durch eine darunterliegende Prägung bzw. Reliefstruktur vermittelte - farbgebende Struktur umfassen, beispielsweise als Subwellenlängenstruktur. In bevorzugten Ausgestaltungen liegt jedoch eine farbgebende Schicht, insbesondere als lasierende Farbschicht, über der reflektionserhöhenden Schicht. Lasierende Farbschichten sind vorteilhaft, da sie nur wellenlängenabhängig semitransparent sind, aber für den Betrachter abgesehen von der Farbgebung klar durchsichtig sind.

Die Mikroreflektoren des ersten und zweiten Sicherheitsmerkmals liegen in den bevorzugten Ausgestaltungen auf unterschiedlichen Höhenstufen vor. Das Anordnen der Mikroreflektoren auf unterschiedlichen Höhenstufen ermöglicht eine einfachere unterschiedliche Beschichtung der ineinander verschachtelten unterschiedlichen Mikroreflektoren. Parallel zur Ebene des Sicherheitselements liegen somit die Mikrospiegel auf einer ersten und auf einer zweiten Höhenstufe. Senkrecht zur Ebene des Sicherheitselements liegen die unterschiedlichen Höhen vor. Der Höhenunterschied der beiden Höhenstufen ist größer als eine maximale Reliefhöhe der Mikroreflektoren, insbesondere mindestens 1,5 mal oder doppelt so groß wie die maximale Reliefhöhe (bzw. Ganghöhe). Die Flächenausdehnung des Sicherheitselements definiert eine auf der Fläche senkrecht stehende z-Richtung. Das Sicherheitselement enthält die zwei Reliefstrukturen, die in z-Richtung in unterschiedlichen Höhenstufen angeordnet sind. Die Reliefstrukturen sind jeweils mit einer Farbbeschichtung versehen sind, die einen unterschiedlichen Farbeindruck erzeugen. Die Reliefstrukturen sind vorteilhaft jeweils durch eine maximale Ganghöhe charakterisiert, wobei der Abstand benachbarter Höhenstufen in z-Richtung größer als die maximale Ganghöhe des jeweils tiefer liegenden Prägestrukturbereichs ist. Vorzugsweise ist der Abstand größer als 150%, besonders bevorzugt 200%, der maximalen Ganghöhe. Weiter bevorzugt liegt der Abstand benachbarter Höhenstufen in z-Richtung zwischen 150% und 750%, besonders bevorzugt zwischen 200% und 500%, weiter bevorzugt zwischen 200% und 400% der maximalen Ganghöhe des tiefer liegenden Prägestrukturbereichs.

In einer ersten Variante liegen die Mikrospiegel beider Sicherheitsmerkmale als Teilreliefstrukturen auf unterschiedlichen Höhenstufen in einer gemeinsamen Reliefstruktur, die also insbesondere mit nur einem Prägeschritt erzeugt werden kann. Auf der höher liegenden Teilreliefstruktur kann eine Beschichtung beispielsweise selektiv übertragen (von einer Donorfolie) nach Kontakt), abgehoben (auf eine Akzeptorfolie) oder weggewischt werden. Zuvor oder danach werden beide Teilreliefstrukturen gemeinsam mit einer, beispielsweise der reflektionserhöhenden (vorab) oder einer zweiten farbgebenden (danach), Beschichtung versehen.

In der bevorzugten zweiten Variante liegen die Mikroreflektoren der beiden Sicherheitsmerkmale als eigenständige Reliefstrukturen auf unterschiedlichen Höhenstufen. Das Sicherheitselement umfasst somit einer erste Reliefstruktur mit den Mikroreflektoren des ersten Sicherheitsmerkmals und eine separate zweite Reliefstruktur auf einer anderen Höhenstufe mit den Mikroreflektoren des zweiten Sicherheitsmerkmals. Beide Reliefstrukturen können in getrennten Prägeschritten erzeugt werden, beispielsweise auch auf unterschiedlichen Seiten eines Trägers.

Die Reliefstrukturen werden hier bevorzugt durch Prägen einer Schicht, insbesondere einer Prägelackschicht, vorzugsweise UV-härtend, oder einer thermoplastischen Trägerschicht erzeugt.

Die Mikroreflektoren haben vorzugsweise eine Größe zwischen 1 bis 60 (bzw. 100) µm, bevorzugt zwischen 3 bis 30 µm. Die Mikroreflektoren können gebildet sein durch einen Mikrospiegel mit einer gerichteten, vorzugsweise planen, Oberfläche, durch eine gerichtet reflektierende Fresnelstruktur, durch eine gerichtet reflektierende Beugungsstruktur oder durch eine gerichtet reflektierende Subwellenlängenstruktur.

Die Mikroreflektoren werden bevorzugt als Mikrospiegel realisiert, insbesondere da sie eine besonders helle und achromatische Lichtreflektion zeigen. Mikrospiegel reflektieren einfallendes Licht im Wesentlichen nach den Regeln der geometrischen Optik. Mikrospiegel können als plane Facetten gestaltet sein. Sie sollten so klein sein, dass sie mit dem unbewaffneten Auge kaum oder gar nicht mehr einzeln aufgelöst werden können. Die Größe der Mikrospiegel (laterale Abmessungen) liegt unterhalb von 100 µm. Am unteren Ende der Größen sollen die lateralen Abmessungen zur Vermeidung unerwünschter Beugungseffekte größer als 3 µm, bevorzugt größer als 5 µm und besonders bevorzugt etwa 10 µm groß oder größer sein.

Neben der bevorzugten Ausführung als Mikrospiegel können als Mikroreflektoren aber auch andere reflektierende Mikro- oder Nanostrukturen verwendet werden. Beispielsweise können insbesondere auch Beugungsstrukturen verwendet werden (z.B. Hologrammgitter mit Perioden von ca. 0,6 µm bis 2 µm, bevorzugt achromatische "Mattstrukturen" oder asymmetrische "Blaze-Gitter") oder Subwellenlängenstrukturen. Alle genannten Mikroreflektor-Typen können mittels Reliefstrukturen erzeugt werden. Die Mikroreflektoren werden bevorzugt in einen Prägelack eingeprägt (z.B. thermoplastischer oder strahlungshärtender, insbesondere UV-härtender Prägelack) und mit einer reflektionserhöhenden Beschichtung versehen (insbesondere z.B. mit einer stark reflektierenden opaken Metallisierung).

Die Mikroreflektoren des Sicherheitsmerkmals bzw. der Sicherheitsmerkmale liegen in einer Mikroreflektoren-Anordnung vor. Die Mikroreflektoren der Sicherheitsmerkmale können zumindest im ersten Flächenbereich ineinander verschachtelt sein, vorzugsweise liegen sie verschachtelt aber auf unterschiedlichen Höhenstufen vor. In zumindest einem Pixel der Mikrospiegelanordnung können sowohl unterschiedlich ausgerichtete als auch gleich ausgerichtet Mikroreflektor vorhanden sein. Insbesondere kann die Ausrichtung der Mikroreflektoren in der Mikroreflektoren-Anordnung - auch für benachbarte Mikroreflektoren - vorab frei gewählt werden. Weiter können Mikroreflektoren in der Mikroreflektoren-Anordnung in einem Raster oder quasizufällig angeordnet sein, also beispielsweise zeilen- uns spaltenweise mit einheitlicher Größe oder mit quasizufälliger Position und/oder quasizufälliger Größe.

Die Mikroreflektoren (z.B. Mikrospiegel) des ersten bzw. zweiten Sicherheitsmerkmals können auf einem feinen Streifen- oder Schachbrettmuster in einander verschachtelt sein, das ein Betrachter mit dem unbewaffneten Auge kaum oder gar nicht auflösen kann oder zumindest nicht wahrnimmt. In vorteilhaften Ausführungen können Pixelgrößen, bzw. Streifenbreiten oder Feldgrößen, einer von 150 µm oder kleiner, bevorzugt 100 µm oder kleiner bzw. besonders bevorzugt sogar 50 µm oder kleiner verwendet werden.

Natürlich könnten die Motive in ihrer Form und/oder Farbe übereinstimmen. Bevorzugt unterscheiden sich jedoch die beiden Motive der Sicherheitsmerkmale in mindestens zwei, vorzugsweise mindestens drei, weiter vorzugsweise mindestens vier oder allen, der Parameter: Kontur, Farbe, linienartig/flächig, Einheitlichkeit und Kippwinkelvarianz. Die (Außen)Kontur bestimmt die äußere Form des Motivs. Das Motiv kann linienartig gestaltet sein, also mit Hilfe von Linien dargestellt - inklusive Außenkontur, oder flächig, also als gefüllte Fläche (mit oder ohne Musterung) gestaltet sein. Einheitlich oder uneinheitlich kann das bei einem Kippwinkel sichtbare Motiv gestaltet sein, beispielsweise: einfarbig oder mehrfarbig, vollflächig oder gemustert. Das sichtbare Motiv kann, wie bereits erwähnt, unabhängig vom konkreten Kippwinkel sein (invariant) oder sich mit dem Kippwinkel ändern (z.b. in Form/Größe/Einheitlichkeit).

In besonders bevorzugten Ausgestaltungen sind die Mikroreflektoren des ersten Sicherheitsmerkmals einheitlich ausgerichtet. Der erste Flächenbereich wird als flächiges Motiv des ersten Sicherheitsmerkmals im Wesentlichen nur unter einem Betrachtungswinkel sichtbar.

In alternativen Ausgestaltungen des ersten Sicherheitsmerkmals können alle Mikroreflektoren für die Kipprichtung eine im Wesentlichen einheitliche Komponente des Neigungswinkels haben, aber unterschiedliche Azimutwinkel aufweisen. Somit könnten das erste Sicherheitsmerkmal - als Motiv in der Größe des ersten Flächenbereiches - für den Betrachter auch dreidimensional, insbesondere gewölbt oder höhenverschoben, erscheinen. Das Motiv ist für den Betrachter aus der Ebene des Sicherheitselements hinaus gewölbt oder es liegt scheinbar über oder unter der Ebene des Sicherheitselements.

Das zweite Sicherheitsmerkmal ist dagegen bevorzugt als linienartiges Motiv ausgestaltet. Eine Linie, deren Länge und Form sich bei der Bewegung ändern kann, bewegt sich kontinuierlich über den zweiten Flächenbereich. So kann sich beispielsweise eine gerade Linie (unverändert) linear oder nichtlinear über den Flächenbereich bewegen. Ebenso kann eine Konturlinie eines Motivs, wie Dreieck, sich radial nach außen bewegen. Die Größe des Dreiecks wächst in diesem Fall beim Kippen an (oder nimmt ab). Die Konturlinie und damit die Außenkontur des Motivs kann sich aber auch ändern, beispielsweise vom Dreieck zum Stern bei radialer Bewegung oder von einer konkav zu einer konvex gekrümmten Linie bei linearer Bewegung. In besonders bevorzugten zweiten Sicherheitsmerkmalen bewegt sich die Linie in eine erste Richtung und entlang der Linie wird zugleich eine zweite Bewegung sichtbar. Die zweite Bewegung wird vorzugsweise erzeugt, indem die Linie als nicht durchgehende Linie erzeugt wird, deren (Linienunterbrechungen bzw.) Linienabschnitte sich entlang der Linie bewegen.

Vorzugsweise sind in gerichtetem Licht die beiden Motive der Sicherheitsmerkmale in den genannten Kippwinkelbereichen hell reflektierend sichtbar, insbesondere vor einem dunklen - unter dem jeweiligen Winkel nicht reflektierenden - Hintergrund. Ebenso können weiter bevorzugt, in gerichtetem Licht die beiden Motive der Sicherheitsmerkmale eine vergleichbare Konturschärfe aufweisen.

In weiteren Ausgestaltungen kann das Sicherheitselement ein weiteres erstes (bzw. drittes) Sicherheitsmerkmal aufweisen. Diese dritte Sicherheitsmerkmal wird auch als weiteres erstes Sicherheitsmerkmal bezeichnet, da es die gleichen Eigenschaften hat, wie das erste Sicherheitsmerkmal. Das Motiv des weiteren ersten Sicherheitsmerkmal ist nur in einem weiteren ersten Betrachtungswinkelbereich in einem weiteren ersten Flächenbereich sichtbar. Der zweite Betrachtungswinkelbereich umfasst beide ersten Betrachtungswinkelbereiche.

Das Sicherheitselement ist vorgesehen zur Einbettung in oder Aufbringung auf ein Substrat, wie Folie, Papier oder Verbund daraus, insbesondere eines Wertdokuments, eines Ausweises oder eines Markenproduktes. Das Sicherheitselement kann beispielsweise als Sicherheitsfaden, Sicherheitsstreifen, Sicherheitspatch oder Sicherheitsschicht, insbesondere für Wertdokumente aber auch zur Absicherung von Markenartikeln oder Produkten bereitgestellt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit zwei Sicherheitselementen,
- Fig. 2: vier Ansichten eines Sicherheitselements bei verschiedenen Kippwinkeln,
- Fig. 3: eine regelmäßige Mikroreflektoren-Anordnung in Aufsicht,
- Fig. 4: eine unregelmäßige Mikroreflektoren-Anordnung in Aufsicht,
- Fig. 5: Querschnitt durch eine erste Ausgestaltung einer Mikroreflektoren-Anordnung,
- Fig. 6: Querschnitt durch eine zweite Ausgestaltung einer Mikroreflektoren-Anordnung mit Teilreliefstrukturen auf unterschiedlichen Höhestufen,
- Fig. 7: Querschnitt durch eine dritten Ausgestaltung einer Mikroreflektoren-Anordnung mit zwei getrennten Reliefstrukturen auf unterschiedlichen Höhestufen,
- Fig. 8: Querschnitt durch eine vierte Ausgestaltung einer Mikroreflektoren-Anordnung mit zwei getrennten Reliefstrukturen auf unterschiedlichen Höhestufen,
- Fig. 9: mehrere Ansichten eines weiteren Sicherheitselements bei verschiedenen Kippwinkeln.

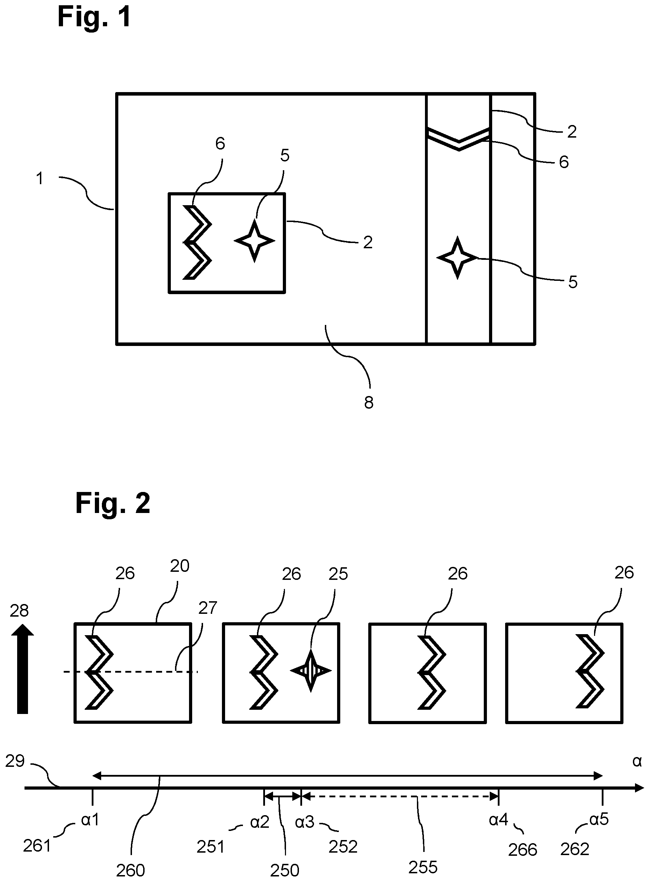

Die Erfindung wird nun am Beispiel von Sicherheitselementen für Banknoten erläutert. Figur 1 zeigt eine schematische Darstellung einer Banknote 1 mit zwei erfindungsgemäßen optisch variablen Sicherheitselementen 2. In dieser Ausgestaltung sind beide Sicherheitselemente, als Patch und als Streifen, auf das Substrat 8 der Banknote 1 aufgebracht.

Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patch mit oder ohne eigene Trägerschicht) beispielsweise auch eingebettete Sicherheitselemente, wie Sicherheitsfäden oder Sicherheitsschichten als teil- oder vollflächige Teilschicht des Substrats, in Betracht.

Die Sicherheitselemente 2 umfassen jeweils zwei Sicherheitsmerkmale 5, 6, deren Motive in der Figur für einen bestimmten Kippwinkel der Banknote dargestellt ist. Die beiden Motive der Sicherheitsmerkmale werden durch eine gemeinsame Mikroreflektor-Anordnung kippwinkelabhängig erzeugt. Das sternförmige Motiv des ersten Sicherheitsmerkmals 5 ist statisch und nur in einem bestimmten Kippwinkelbereich sichtbar. Das linienförmige Motiv des zweiten Sicherheitsmerkmals 6 bewegt sich dagegen beim Kippen der Banknote 1 über das Sicherheitselement 2. Es bewegt sich auf dem Patch als Sicherheitselement 2 von links nach rechts und - einige Zeit nachdem der Stern des ersten Sicherheitsmerkmals wieder verschwunden ist - auch über den sternförmigen Bereich hinweg. Im sternförmigen Bereich liegen hier Mikrospiegel beider Sicherheitsmerkmale ineinander verschachtelt vor, um beide Motive darstellen zu können. Die Motive der beiden Sicherheitsmerkmale sind bevorzugt unterschiedlich farbig, insbesondere für den Betrachter in einer ersten respektive zweiten Farbe sichtbar. Natürlich könnten die Motive auch in Form und/oder Farbe übereinstimmen. Die Verwendung zweier unterschiedlicher Farben erhöht hier jedoch die Fälschungssicherheit, da solche Sicherheitselemente sehr schwer nachzustellen sind.

Auf dem Sicherheitsstreifen als dem zweiten Sicherheitselement 2 auf der Banknote 1 bewegt sich das linienförmige Motiv des Sicherheitsmerkmals 6 für den gleichen Kippvorgang von oben nach unten. Auf der Banknote 1 liegen also zwei Sicherheitselemente 2 mit unterschiedlichen Bewegungsrichtungen vor.

Das Verhalten der Sicherheitsmerkmale auf dem Sicherheitselement bei dem Kippen wird nun mit Bezug auf Figur 2 näher beschrieben.

Ein Sicherheitselement 20 ist in Fig. 2 für vier verschiedene Kippwinkel dargestellt. Das Sicherheitselement 20 wird um eine vorgegebene Achse 27 gekippt. Die Achse 27 liegt in der Ebene des Sicherheitselements 20. Mit einem Pfeil ist eine entsprechende Kipprichtung 29 angedeutet. In diesem Beispiel könnte man auch von einem Nord-Süd-Kippen sprechen. Für den Kippwinkel α zeigt eine Skala 29 unterschiedliche Kippwinkel α₁ bis α₅. Die Kippwinkel α₁ und α₅ liegen bevorzugt symmetrisch um die senkrechte Aufsicht. In einer Notation der Kippwinkel mit 0 Grad für senkrechte Aufsicht, könnten also +/- x Grad vorliegen. Alternativ könnten die Winkel aber auch nur positive (oder negative) Werte bzw. schwerpunktmäßig positive oder negative Werte haben.

Die Motive 25, 26 treten für den Betrachter kippwinkelabhängig durch gerichtete Reflektion hell hervor. Der Hintergrund bleibt dunkel, reflektiert also kein Licht zum Betrachter. Bevorzugt sind die Motive für den Betrachter in unterschiedlichen Farben erkennbar, also beispielsweise als grüner Stern 25 und als rote bewegte Linie 26.

Das Motiv 25 des ersten Sicherheitsmerkmals ist nur in einem kleinen Kippwinkelbereich 250 sichtbar. Der Kippwinkelbereich 250 wird durch eine Kippwinkeluntergrenze 251 und eine Kippwinkelobergrenze 252 definiert. Außerhalb des Kippwinkelbereiches 250, also beispielsweise in der ersten, dritten und vierten Darstellung des Sicherheitselements in der Figur, ist das Motiv 25 nicht sichtbar. Das Motiv 26 des zweiten Sicherheitsmerkmals ist dagegen über einen wesentlich größeren Kippwinkelbereich 260 sichtbar. Der Kippwinkelbereich 260 hat ebenfalls eine Kippwinkeluntergrenze 261 und eine kippwinkelobergrenze 262. Das Motiv 26 ist eine Zickzack-Linie oder W-förmige Linie und bewegt sich beim Kippen kontinuierlich über das Sicherheitselement 20. Ab der Kippwinkeluntergrenze 261 ist das Motiv links auf dem Sicherheitselement sichtbar, mit steigendem Kippwinkel wandert das Motiv 26 nach rechts. Im Kippwinkelbereich 250 ist das Motiv 26 deutlich von dem Motiv 25 des ersten Sicherheitsmerkmals beanstandet. Zudem ist vorliegend relevant, dass das bewegte Motiv 26 erst bei einem Kippwinkel α₄, der als Bereichskippwinkel 266 bezeichnet wird, in dem ersten Flächenbereich des ersten Sicherheitsmerkmals ankommt. Der Kippwinkelabstand 255, gebildet aus der Differenz des Bereichskippwinkels 266 und der Kippwinkelobergrenze 252, ist groß gegenüber dem Kippwinkelbereich 250. In diesem Beispiel ist der Kippwinkelabstand 255 größer als der vierfache Kippwinkelbereich 250.

In gerichtetem Licht sind beide Motive 25, 26 für den Betrachter mit hoher Konturschärfe sichtbar. Die Kontur des Sterns als Motiv 25 ist ebenso gut vom ansonsten dunklen Hintergrund abgegrenzt, wie die W-Linie des Motivs 26. In diffusem Licht sieht der Betrachter im Kippwinkelbereich 25, dass die Konturschärfe des Motivs 25 des ersten Sicherheitsmerkmals erkennbar höher ist als die Konturschärfe des Motivs 26 des zweiten Sicherheitsmerkmals. Der Bewegungseffekt bleibt auch im diffusem Licht erhalten und auch die Form, also das W, bleibt erkennbar. Anstelle einer Linie zeigt das zweite Sicherheitsmerkmal als Motiv jedoch eher ein Band mit unscharfer Kontur. Die Helligkeit des Bandes nimmt nun - von innen nach außen - erkennbar ab, so dass das Motiv in seiner Kontur eher unscharf wirkt. Der statische und flächige Bereich 25 des ersten Sicherheitsmerkmals hat dagegen auch im diffusem Licht eine definierte Kontur. Zu diesem Effekt trägt auch der große Unterschied in der Größe der Kippwinkelbereiche 250, 260 bei. Je kleiner der zweite Kippwinkelbereich ist, desto leichter wird es einen großen Kippwinkelabstand 255 zu bilden. Die Ausrichtung der Mikroreflektoren des zweiten Sicherheitsmerkmals im ersten Flächenbereich, des Sterns, und in dem angrenzenden Umgebungsbereich unterscheidet sich mit steigendem Kippwinkelabstand immer mehr von der Ausrichtung der Mikroreflektoren des ersten Sicherheitsmerkmals. Insgesamt können im angrenzenden Umgebungsbereich auf diesem Weg auch leichter Mikroreflektoren vermieden werden, die im Kippwinkelbereich 250 unter diffusem Licht das Licht zum Betrachter reflektieren würden.

Bei einer Realisierung der Mikroreflektoren durch Mikrospiegel könnten parallel zur Kippachse die Spiegel am linken Rand des Flächenbereichs nach oben und am rechten Rand nach unten ausgerichtet sein und deren Orientierung dazwischen kontinuierlich monoton von einer Ausrichtung nach oben zu einer Ausrichtung nach unten ändert.

Bei einer Ausführung mit anderen Strukturen als Mikrospiegeln sind entsprechend andere Strukturparameter zu ändern, welche die Betrachtungsrichtungen festlegen, unter denen diese Strukturen hell aufleuchten. So kann beispielsweise bei einer Realisierung mit Beugungsgittern je nach vorgesehener Kipp- und Beleuchtungsrichtung die Gitterperiode und/oder ein Azimutwinkel der Beugungsgitter verändert werden.

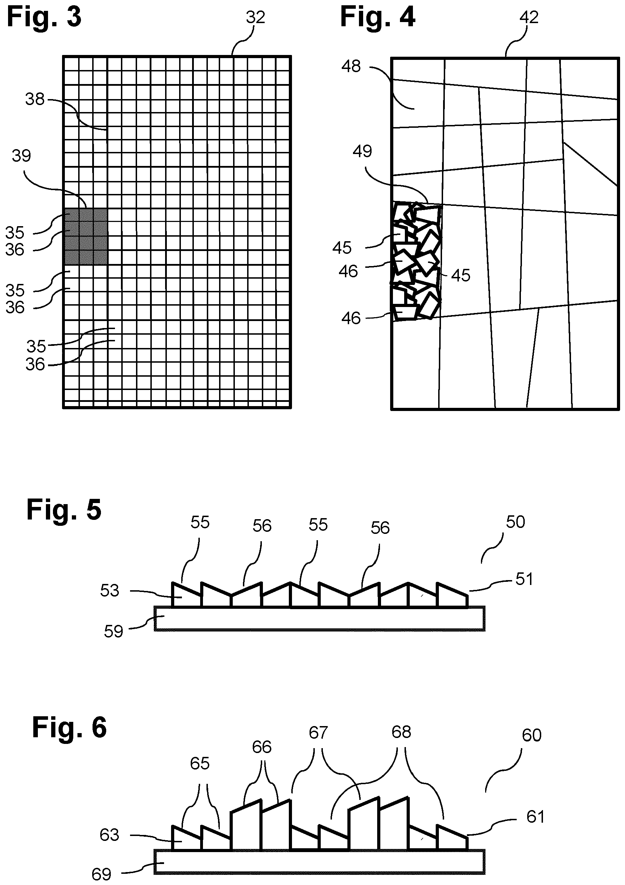

Fig. 3 und 4 zeigen jeweils in Aufsicht zwei an sich bekannte, unterschiedliche Optionen um Mikroreflektoren in einer Mikroreflektoren-Anordnung vorzusehen. Die Mikroreflektoren, beispielsweise als Mikrospiegel, können in Ihrer Ausrichtung, beispielsweise mit Neigungswinkel und Azimutwinkel, frei gewählt werden.

In der Mikroreflektoren-Anordnung 32 der Fig. 3 sind Mikroreflektoren 35, 36 einheitlicher Größe regelmäßig, in einem regelmäßigen Raster, angeordnet. Innerhalb der Mikrospiegelanordnung 32 können jeweils mehrere Mikroreflektoren zu einem Pixel 39 zusammengefasst sein. Gezeigt ist das Pixel 39 mit drei mal vier Mikroreflektoren. Die Mikrospiegelanordnung ist derart ebenfalls regelmäßig in eine Vielzahl von Pixeln aufgeteilt, welche als Pixel-Aufteilung 38 angedeutet ist. In dem Pixel 39 ist ein erster Mikroreflektor 35 des ersten Sicherheitsmerkmals und ein zweiter Mikroreflektor 36 des zweiten Sicherheitsmerkmals angeordnet. Vorliegend müssten, da zwei Motive verschachtelt werden sollen, mindestens zwei Mikroreflektoren pro Pixel vorliegen.

In der Mikroreflektoren-Anordnung 42 der Fig. 4 sind Mikroreflektoren 45, 46 quasizufälliger Größe quasizufällig angeordnet. Die Figur zeigt weiterhin dass auch eine Aufteilung 48 in Pixel 49 nicht regelmäßig sein muss. In dem Pixel 49 liegen jeweils zwei erste Mikroreflektoren 45 des ersten Sicherheitsmerkmals und zweite Mikroreflektoren 46 des zweiten Sicherheitsmerkmals.

In beiden Mikroreflektoren-Anordnungen 32, 42 kann ein Pixel mehr als einen Mikroreflektor eines Sicherheitsmerkmals umfassen. So kann beispielsweise die Helligkeit eines flächigen Motivs, ggf. sogar lokal, unterschiedlich eingestellt werden. Vorliegend werden in dem ersten Flächenbereich (des Motivs des ersten Sicherheitsmerkmals) bevorzugt prozentual mehr Mikroreflektoren für das erste Sicherheitsmerkmal als für das zweite Sicherheitsmerkmal vorgesehen, beispielsweise im Verhältnis 66% zu 33% oder 75% zu 25%.

Die Mikroreflektoren liegen, wie nun anhand der Fig. 5 bis 7 beschrieben wird, nicht zwingend in einer gemeinsamen Ebene (bzw. Höhenstufe), sondern bevorzugt auf unterschiedlichen Höhenstufen.

Fig. 5 zeigt im Querschnitt zunächst die einfachste Art einer Anordnung von Mikroreflektoren 55, 56 in einem Sicherheitselement 50. Auf einer Schicht 59, die eine Trägerschicht sein kann, liegt eine durchgehende geprägte Schicht 53, beispielsweise eine UV-gehärtete Prägelackschicht. Das Sicherheitselement 50 umfasst somit eine Reliefstruktur 51, in welcher die gerichteten Mikroreflektoren 55, 56 ausgebildet sind. Lediglich zur Veranschaulichung sind vertikale Trennlinien zwischen den benachbarten Mikroreflektoren dargestellt. Die Mikroreflektoren 55 des ersten Sicherheitsmerkmals und die Mikroreflektoren 56 des zweiten Sicherheitsmerkmals unterscheiden sich durch ihre Ausrichtung, hier ihrem Neigungswinkel zur Ebene des Sicherheitselements.

In der Regel ist die Mikroreflektor-Anordnung mit einer reflektionserhöhenden Schicht, wie beispielsweise einer Metallisierung, versehen. Ebenso oder zusätzlich kann eine farbgebende Beschichtung oder Struktur für zumindest eines der Sicherheitsmerkmale vorgesehen werden. Der Betrachter soll die Motive der beiden Sicherheitsmerkmale in unterschiedlichen Farben sehen.

Für die Ausgestaltung nach Figur 5 ist eine selektiv unterschiedliche Beschichtung der Mikroreflektoren der beiden Sicherheitsmerkmale schwer umsetzbar. Daher wird eine farbgebende Struktur - vorzugsweise zusammen mit der Reliefstruktur - erzeugt. Als farbgebende Struktur kann eine diffraktive Struktur oder eine Subwellenlängenstruktur dienen. Selbige sind für sich genommen hinreichend aus dem Stand der Technik bekannt. Die farbgebende Struktur ist der Reliefstruktur der Mikroreflektoren überlagert und kann ebenso das Vorliegen einer reflektionserhöhenden Schicht erfordern.

Fig. 6 zeigt ein Sicherheitselement 60 mit einer (Träger-)Schicht 69 und einer Reliefschicht 63, in welcher eine Reliefstruktur 61 vorliegt. Die Reliefstruktur 61 umfasst zwei Teilreliefstrukturen 67, 68. Die Teilreliefstrukturen 67, 68 sind auf unterschiedlichen Höhenstufen - senkrecht zur Ebene des Sicherheitselements - angeordnet. Die höher liegende Teilreliefstruktur 67 umfasst die Mikroreflektoren 66 des zweiten Sicherheitsmerkmals. Die tiefer liegende Teilreliefstruktur 68 umfasst die Mikroreflektoren 65 des ersten Sicherheitsmerkmals.

Die Teilreliefstrukturen und somit die Mikrospiegel der beiden Sicherheitsmerkmale können nun, da sie auf unterschiedlichen Höhenstufen liegen, einfacher selektiv unterschiedlich beschichtet werden. Vorzugsweise werden beide Teilreliefstrukturen mit einer reflektionserhöhenden Beschichtung versehen. Anschließend kann nur eine Teilreliefstruktur mit einer lasierenden Farbe beschichtet werden oder können beide Teilreliefstrukturen mit unterschiedlichen lasierenden Farben versehen werden.

Auf die höher liegende Teilreliefstruktur 67 in Fig. 6 kann in einem Kontakttransferschritt Farbe übertragen werden. Ebenso kann von der höher liegenden Teilreliefstruktur 67 eine - auf beide Teilreliefstrukturen 67, 68 aufgebrachte - Farbe weggewischt oder mittels eines Kontaktabhebeschrittes entfernt werden.

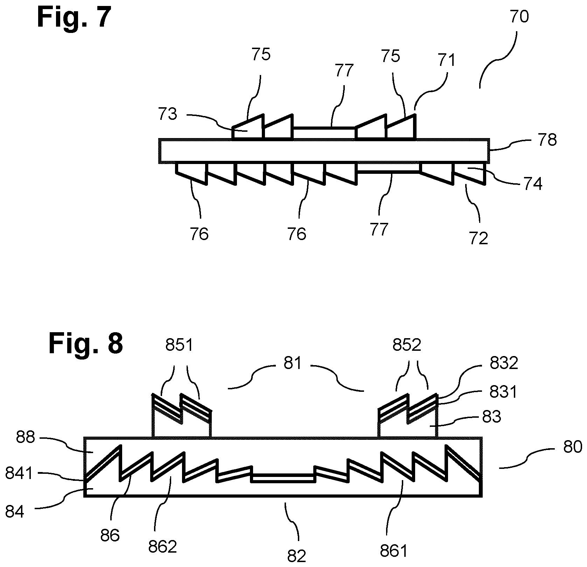

Fig. 7 zeigt ein Sicherheitselement 70 mit einer Zwischenschicht 78 und zwei unabhängigen Reliefschichten 73, 74. Für jedes der beiden Sicherheitsmerkmal ist eine eigene Reliefstruktur 71, 72 vorgesehen. Die erste Reliefstruktur 71 umfasst die Mikroreflektoren 75 des ersten Sicherheitsmerkmals. Die zweite Reliefstruktur 72 umfasst die - zumindest im Überlappungsbereich - anders ausgerichteten Mikroreflektoren 76 des zweiten Sicherheitsmerkmals. In der ersten Reliefstruktur 71 sind transparente Abschnitte 77 (oder Aussparungen in der Reliefschicht) vorgesehen. Die transparenten Abschnitte 77 können strukturiert oder unstrukturiert sein, sie sind jedoch nicht mit der reflektionserhöhenden Beschichtung versehen. Die Größe der transparenten Abschnitte 77 liegt vorzugsweise im Bereich von einem oder wenigen Mikroreflektoren, also beispielsweise zwischen 5 und 200 µm. Die unter den transparenten Abschnitten 77 angeordneten Mikroreflektoren 76 des zweiten Sicherheitsmerkmals erzeugen das Motiv für den Betrachter. An Positionen, die durch Mikroreflektoren 75 der ersten Reliefstruktur 71 verdeckt sind, können in der zweiten Reliefstruktur 72 optional Mikroreflektoren 76 vorliegen oder transparente und/oder unstrukturierte Abschnitte 77 vorliegen. Dass zwei transparente Abschnitte auch übereinander angeordnet sein können, um ein Durchsichtsmerkmal zu bilden, ist für sich genommen bekannt. Für weitere Details eines solchen Aufbaus, beispielsweise für Varianten der gerasterten Anordnung der Mikroreflektoren in der oberen Reliefstruktur kann auf DE 102018005447 verwiesen werden.

Die in getrennten Reliefstrukturen 71, 72 vorliegenden Mikroreflektoren 75, 76 können nun auch getrennt voneinander mit einer farbgebenden Beschichtung oder farbgebenden Zwischenschicht versehen werden. In einer ersten Variante wird die Zwischenschicht 78 oder die zweite Reliefschicht 74 als zweite farbgebende Schicht für die zweiten Mikroreflektoren 76 des zweiten Sicherheitsmerkmals verwendet. Optional können dabei die ersten Mikroreflektoren mit einer ersten lasierenden Farbschicht, mit unterschiedlicher Farbe, beschichtet werden. Die transparenten Abschnitte 77 der ersten Reliefstruktur 71 bleiben frei von der ersten Farbe. Sie könnten jedoch theoretisch auch mit beschichtet werden, falls das erste Motiv in einem Mischfarbton aus erster und zweiter Farbe sichtbar werden soll. In einer zweiten Variante wird über zumindest einer der (oder beiden) reflexionserhöhenden Beschichtungen der ersten oder zweite Mikrospiegel 75, 76 eine (oder zwei unterschiedliche) lasierende Farbschichten aufgebracht. Die zweite Reliefstruktur 72 wird entsprechend zunächst farblich und dann reflektionserhöhend beschichtet.

In Aufsicht können mit allen Varianten nach Fig. 5 bis 8 beispielsweise wiederum die Anordnungen nach Fig. 3 oder 4 oder andere gewünschte Verschachtelungen erzielt werden. Selbstverständlich blickt der Betrachter weiterhin von oben auf die im Querschnitt dargestellten Sicherheitselemente.

Wie aus dem Vorstehenden bereits ableitbar ist, können auch eine farbgebende Beschichtung und eine farbgebende Struktur in einer Mikroreflektor-Anordnung, für unterschiedliche Sicherheitsmerkmale oder sogar für dasselbe Sicherheitsmerkmal, verwendet werden.

Fig. 8 zeigt noch einmal eine Ausgestaltung mit zwei Reliefstrukturen 81, 82 auf zwei Höhenstufen in einem Sicherheitselement 80. Erstmals figürlich dargestellt sind die weiteren Beschichtungen 831, 832, 841. Eine erste Reliefschicht 83 mit der ersten Reliefstruktur 81 wird nur partiell vorgesehen. Auf der Reliefschicht 83 ist eine reflektionserhöhende Schicht 831 und eine lasierende Farbschicht 832 aufgebracht. Erste Mikroreflektoren 851 in einem ersten Flächenbereich sind einheitlich in einer ersten Richtung ausgerichtet. Der Flächenbereich hat beispielsweise die Kontur des Buchstaben A. In diesem Beispiel sind weitere erste (bzw. dritte) Mikroreflektoren 852 in einem weiteren ersten (bzw. dritten) Flächenbereich einheitlich in einer anderen Richtung ausgerichtet. Der dritte Flächenbereich hat beispielsweise die Kontur des Buchstaben B. Die Buchstaben A und B werden für den Betrachter in der Farbe der lasierenden Farbschicht 832, also beispielsweise grün, sichtbar. Auf einer zweiten Reliefschicht 84 mit der zweiten Reliefstruktur 82 und deren Mikroreflektoren 86 liegt die reflektionserhöhende Schicht 841. Eine farbgebende Schicht 88 ist hier als höhenausgleichende Schicht gestaltet. Alternativ sind selbstverständlich auch eine separate Zwischenschicht oder eine nichthöhenausgleichende Schicht (analog zur Farbschicht 832) als farbgebende Schicht einsetzbar. Durch die farbgebende Schicht 88 sieht der Betrachter das bewegte Motiv des zweiten Sicherheitsmerkmals, das durch die zweiten Mikroreflektoren 86, 861, 862 erzeugt wird, in einer anderen Farbe, beispielsweise rot.

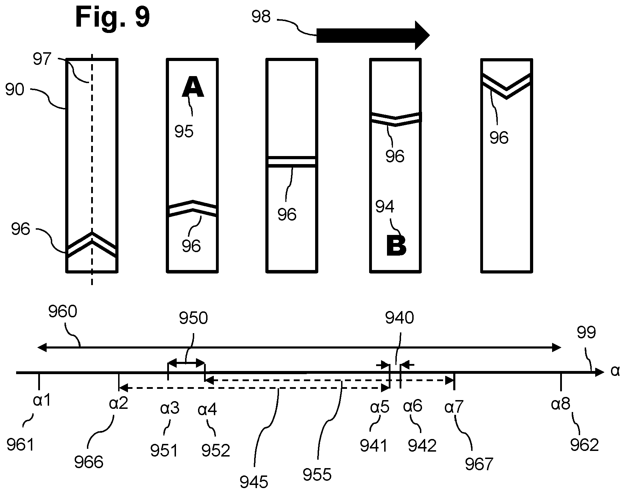

Fig. 9 zeigt die optische Wirkung eines Sicherheitselements 90 beim Kippen um eine Achse 97. Die Kipprichtung ist wiederum mit dem Pfeil 98 angedeutet und könnte als Ost-West-Kippen bezeichnet werden. An der Achse 99 der Kippwinkel α sind in diesem Beispiel acht verschiedene Kippwinkel α₁ bis α₈ dargestellt.

Die Ausgestaltung der Motive in Fig. 9 orientiert sich am Beispiel aus Fig. 8 mit zwei ersten Sicherheitsmerkmalen, deren Motive 94, 95 als flächenhafte Buchstaben kippwinkelabhängig sichtbar werden. Das erste Motiv 95 in Form des Buchstabens A ist nur in einem ersten Kippwinkelbereich 950 (α₃ bis α₄) in seinem Flächenbereich sichtbar. Das weitere erste (bzw. dritte) Motiv 94 in Form des Buchstabens B ist nur in einem weiteren ersten Kippwinkelbereich 940 (α₅ bis α₆) in seinem Flächenbereich sichtbar. Diese beiden ersten Kippwinkelbereiche 940, 950 sind sehr klein - mindestens um einen Faktor vier kleiner, eher mehr als 10 mal kleiner - gegenüber dem zweiten Kippwinkelbereich 960 (α₁ bis α₈) des bewegten Motivs 96 des zweiten Sicherheitsmerkmals. Das zweite Motiv 96 ist beim Kippwinkel α₁ als V-förmige nach unten geöffnete Linie im unteren Abschnitt des Sicherheitselements sichtbar. Das Motiv 96 wandert danach beim Kippen kontinuierlich nach oben und ändert dabei seine Form, bis es beim Kippwinkel α₈ als V-förmige nach oben geöffnete Linie im oberen Abschnitt des Sicherheitselements sichtbar ist. Bei einem Bereichskippwinkel 966 (α₂) liegt das Motiv 96 in dem weiteren ersten Flächenbereich des weiteren ersten Motivs 94. Der Kippwinkelabstand 945 zwischen dem Bereichskippwinkel 966 und der Kippwinkeluntergrenze 941 des weiteren ersten Kippwinkelbereiches 940 ist ebenfalls groß verglichen mit der Größe des Kippwinkelbereiches 940 (größer Faktor 5 bzw. 10). Ähnlich ist die Situation für den ersten Kippwinkelbereich 950 des ersten Motivs 95. Erst bei einem Bereichskippwinkel 967 (α₇) liegt das Motiv 96 in dem ersten Flächenbereich des ersten Motivs 95. Der Kippwinkelabstand 955 zwischen dem Bereichskippwinkel 967 und der Kippwinkelobergrenze 952 des ersten Kippwinkelbereiches 950 ist ebenfalls groß verglichen mit der Größe des ersten Kippwinkelbereiches 950 (größer Faktor 4 bzw. 8). Bevorzugt durch unterschiedliche farbgebende Schichten (über Reliefstrukturen auf unterschiedlichen Höhenstufen) sind die Motive für den Betrachter farblich unterschiedlich, also beispielsweise das bewegte Motiv 96 rot und die ersten Motive 94, 95 grün.

Der Betrachter sieht das bewegte Motiv 96 des zweiten Sicherheitsmerkmals in gerichtetem Licht als linienartiges Motiv mit guter Konturschärfe. Die beiden ersten Motive 94, 95 weisen ebenfalls eine hohe Konturschärfe auf, die für den Betrachter insbesondere vergleichbar mit der Konturschärfe des bewegten Motivs 96 ist. Vorliegend sind die Kippwinkelbereiche und die Kippwinkelabstände so groß gewählt, dass die flächigen statischen Motive 94, 95 auch im diffusen Licht eine hohe Konturschärfe haben. Im ersten Kippwinkelbereich 940 sieht der Betrachter im diffusen Licht, dass die Konturschärfe des ersten Motivs 94 höher ist als die Konturschärfe des zweiten Motivs 96. Der Unterschied in der Konturschärfe wird im diffusen Licht ebenso für das weitere erste Motiv 95 im weiteren ersten (bzw. dritten) Kippwinkelbereich 950 im Vergleich mit dem zweiten Motiv 96 beobachtet.

In Fig. 8 oder 9 soll eine Metallisierung 831 der oberen Reliefstruktur 81 noch mit einer passgenauen, insbesondere lasierenden, Buntfarbe 832 überzogen sein, so dass die beiden ersten Motive 94, 95 unter den entsprechenden Kippwinkeln beispielsweise in grüner Farbe aufleuchten. Eine solche passgenaue Überlagerung von semitransparenter Buntfarbe und Metallisierung kann z.B. dadurch erreicht werden, dass man eine zunächst vollflächige Metallisierung mit einem gerasterten Überdruck eines hier grün eingefärbten Resistlacks versieht und das Metall dann an den nicht mit Resistlack geschützten Stellen wegätzt. Alternativ kann der eingefärbte Resistlack in einem Kontakttransferschritt selektiv auf die Metallisierung 831 der oberen Reliefstruktur 81 übertragen werden.

In einer einfachen Ausführung ist der Flächenbereich des weiteren ersten Motivs 94 mit Mikrospiegeln gefüllt, die alle dieselbe Orientierung aufweisen. Dieser Flächenbereich leuchtet im Wesentlichen nur unter einem Betrachtungswinkel hell auf, der Betrachtungswinkelbereich 940 ist beispielsweise kleiner gleich 1 Grad. Der Kippwinkelbereich 950 des ersten Motivs 95 kann leicht vergrößert werden, indem die Ausrichtung seiner Mikroreflektoren in der Fläche des Motivs um einen Vorgabewert quasizufällig variiert. Dieser Ansatz ist bereits näher beschrieben in DE 10 2010 047 250 A1.

In dem zweiten linienartige Motiv 96 können sich wie dargestellt Länge und/oder Form der Linie ändern. Ebenso oder zusätzlich kann eine zweite, motivinterne Bewegung auf der Linie erzeugt werden. Wenn die Linie nicht als durchgängige Linie, sondern als eine regelmäßige oder unregelmäßige Aneinanderreihung kleiner heller Punkte dargestellt wird, kann entlang der Linie die zweite Bewegung dargestellt werden. Weitere Details zu solchen Ausgestaltungen, insbesondere zur Darstellung der Linien, sind beschrieben in DE 10 2010 055 688 A1.

Die ersten Motive 94, 95 sind bevorzugt einfache flächige Motive. In Varianten sind jedoch auch erste Motive mit Wölbung oder motivinterner Bewegung denkbar. Bevorzugt liegt die Richtung der motivinternen Bewegung orthogonal zur Kontur des Motivs (wie zuvor entsprechend DE 10 2010 055 688 A1). Die Konturschärfe des ersten Motives kann zudem bei motivinterner Bewegung auch besser erhalten werden, wenn nur die Ausrichtung der Mikroreflektoren in der Motivinnenfläche, also innerhalb der Kontur, für die motivinterne Bewegung verwendet wird. DE102012020257 A1 beschreibt einen Wölbflipeffekt. Vorliegend kann als erstes Motiv beispielsweise eine der beiden Teilansichten eines solches Wölbflip-Elements als gewölbte Darstellung verwendet werden.

Der an die ersten Motive 94, 95 angrenzende Umgebungsbereich soll im Kippwinkelbereich dieser Motive dunkel wirken. Bevorzugt weisen daher die Mikrospiegel des zweiten Motivs hier eine deutlich andere Steigung auf als die Spiegel der ersten Motive 94, 95.

Wenn die Mikrospiegel der ersten und zweiten Motive in einander verschachtelt vorliegen, so ist es ratsam, eine solche Verschachtelung auch außerhalb der eigentlichen Motivbereiche der ersten Motive fortzusetzen. In der Ausgestaltung nach Fig. 9 könnte man die Fläche des gesamten Sicherheitselements so aufteilen, dass überall eine Verschachtelung vorliegt, in der die Spiegel des zweiten Motivs 96 beispielsweise 50% der Fläche einnehmen. Die anderen 50% werden im Bereich des Motivs "A" mit den entsprechenden Spiegeln des Motivs 95 befüllt, im Bereich "B" mit den Spiegeln des Motivs 94. Außerhalb dieser Bereiche können die nicht mit Spiegeln des zweiten Motiv befüllten 50% der Fläche mit unauffälligen, bei den meisten Betrachtungswinkeln dunklen Strukturen befüllt werden, beispielsweise mit sehr steil verkippen Mikrospiegeln oder mit sogenannten Mottenaugenstrukturen. Würde man in diesen Bereichen 100% der Fläche mit Mikrospiegeln des zweiten Motiv belegen, so wären beim Durchlaufen des zweiten Motivs die Bereiche "A" und "B" dann dunkler als deren Umgebung, da im Bereich des "A"s bzw. des "B"s ja nur 50% der verschachtelten Fläche mit Spiegeln des zweiten Motivs belegt sind. Insofern würden die ersten Motive hier bei anderen als den zugehörigen ersten Kippwinkelbereichen als dunkles "Negativ" sichtbar, was insbesondere mit Blick auf eine möglichst hohe Fälschungssicherheit unerwünscht sein kann.

In den bisher beschriebenen Ausgestaltungen erscheinen die ersten bzw. zweiten Motive jeweils in nur einem (ersten bzw. zweiten) Farbton. Jedes Motiv erscheint in seinem Farbton, die Farbtöne der Motive sind unterschiedlich. Auf den unterschiedlichen Höhenstufen sind beispielsweise unterschiedliche lasierende Farbschichten vorgesehen, die auf der Höhenstufe jedoch einheitlich sind. In weiterführenden Ausgestaltungen können auch innerhalb der ersten bzw. zweiten Motive unterschiedliche Farbtöne vorgesehen sein. Auf einer Höhenstufe können lasierende Farbschichten mit bereichsweise unterschiedlichen Farbtönen vorgesehen werden.

So könnte beispielsweise in Fig. 9 das Motiv 95 eine andere Farbe aufweisen als das Motiv 94, indem diese Bereiche beispielsweise mit unterschiedlichen lasierenden Buntfarben überzogen werden. Weiterhin können auch innerhalb dieser Motive 94, 95 verschiedenen Buntfarben vorliegen. So könnte das Motiv 95 noch eine - durch bereichsweise unterschiedliche lasierende Buntfarben erzeugte - Unterstruktur aufweisen. Beispielsweise könnten die Buchstaben "A" und "B" nicht nur gleichmäßig grün erscheinen sondern z.B. auch eine Musterung in anderer Farbe, z. B. rot, aufweisen. Eine solche Musterung kann auch in Form kleiner Motive, beispielsweise kleiner Wertzahlen oder Währungssymbole, vorliegen. Die Buchstaben könnte hier beispielsweise grün sein mit einem Muster aus kleinen Wertzahlen (z.B. rote "50"er). Weiterhin wären auch Ausführungen mit z.B. Farbverläufen möglich.

### Bezugszeichenliste

- 1: Banknote
- 2: Sicherheitselement
- 5: erstes Sicherheitsmerkmal
- 6: zweites Sicherheitsmerkmal
- 8: Banknotensubstrat
- 20, 90: Sicherheitselement
- 25, 95: Motiv des ersten Sicherheitsmerkmals
- 26, 96: Motiv des zweiten Sicherheitsmerkmals
- 94: Motiv des dritten Sicherheitsmerkmals
- 28, 98: Kipprichtung
- 29, 99: Kippwinkel
- 250, 260, 940, 950, 960: Betrachtungswinkelbereich
- 251, 261, 941, 951, 961: Kippwinkeluntergrenze
- 252, 262, 942, 952, 962: Kippwinkelobergrenze
- 266, 966, 967: Bereichskippwinkel
- 255, 945, 955: Kippwinkelabstand
- 32, 42: Mikrospiegelanordnung
- 38, 48: Pixel-Aufteilung
- 39, 49: Pixel mit Mikrospiegeln
- 35, 45: erste Mikrospiegel des ersten Sicherheitsmerkmals
- 36, 46: zweite Mikrospiegel des zweiten Sicherheitsmerkmals

- 50, 60, 70, 80: Sicherheitselement
- 51, 61: Reliefstruktur
- 67, 68: Teilreliefstruktur
- 71, 81: Erste Reliefstruktur
- 72, 82: Zweite Reliefstruktur
- 53, 63: Prägeschicht
- 73, 83: erste Prägeschicht
- 74, 84: zweite Prägeschicht
- 55, 65, 75, 851, 852: erste Mikrospiegel des ersten Sicherheitsmerkmals
- 56, 66, 76, 861, 862: zweite Mikrospiegel des zweiten Sicherheitsmerkmals
- 77: transparentes Element
- 78, 88: Zwischenschicht
- 59, 69: Trägerschicht
- 831, 841: Reflexionserhöhende Schicht
- 832: Lasierende Farbschicht

## Patentansprüche

1. Optisch variables Sicherheitselement (2) mit einem ersten und einem zweiten Sicherheitsmerkmal (5,6), wobei
- Mikroreflektoren (55; 65; 75; 851) des ersten Sicherheitsmerkmals (5) so ausgerichtet sind, dass bei einem Kippen des Sicherheitselements um eine vorgegebene Achse ein Motiv des ersten Sicherheitsmerkmals (5) für den Betrachter nur in einem ersten Kippwinkelbereich (250; 950) sichtbar ist,
wobei das Motiv des ersten Sicherheitsmerkmals (5) in einem ersten Flächenbereich sichtbar wird;
- Mikroreflektoren (56; 66; 76; 86) des zweiten Sicherheitsmerkmals (6) so ausgerichtet sind, dass für den Betrachter bei dem Kippen des Sicherheitselements um die vorgegebene Achse ein Motiv des zweiten Sicherheitsmerkmal (6) in einem zweiten Kippwinkelbereich (260; 960) sichtbar ist,
wobei der zweite Kippwinkelbereich (260; 960) den ersten Kippwinkelbereich (250; 950) umfasst, und
wobei das Motiv des zweiten Sicherheitsmerkmals (6) sich bei dem Kippen über einen zweiten Flächenbereich bewegt, welcher zumindest teilweise mit dem ersten Flächenbereich überlappt;
**dadurch gekennzeichnet, dass**
der zweite Kippwinkelbereich (260; 960) wesentlich größer als der erste Kippwinkelbereich (250; 950) ist, bevorzugt mindestens die vierfache Größe hat, und
in diffusem Licht das Motiv des ersten Sicherheitsmerkmals (5) im Vergleich zum Motiv des zweiten Sicherheitsmerkmals (6) eine sichtbar erhöhte Konturschärfe aufweist, wobei die Konturschärfe ein Maß für die Erkennbarkeit der Lage der Kontur des Sicherheitsmerkmals für den Betrachter ist.

2. Sicherheitselement nach Anspruch 1, **dadurch gekennzeichnet, dass** zwischen dem ersten Kippwinkelbereich (250, 950) und einem Bereichskippwinkel (266, 966), in welchem das Motiv des zweiten Sicherheitsmerkmals (6) in dem ersten Flächenbereich liegt, ein Kippwinkelabstand (255, 955) vorliegt, der zumindest die dreifache Größe des ersten Kippwinkelbereiches (250, 950) hat.

3. Sicherheitselement nach Anspruch 1 oder 2, **dadurch gekennzeichnet, dass** angrenzend an den ersten Flächenbereich ein Umgebungsbereich vorliegt, welcher in einer Bewegungsrichtung des Motivs des zweiten Sicherheitsmerkmals (6) mindestens die halbe - in der Bewegungsrichtung liegende - Größe des ersten Flächenbereiches aufweist, wobei alle Mikroreflektoren im Umgebungsbereich nicht für den ersten Kippwinkelbereich (250,950) und bevorzugt auch nicht für einen in seiner Größe verdreifachten ersten Kippwinkelbereich ausgerichtet sind.

4. Sicherheitselement nach einem der Ansprüche 1 bis 3, **dadurch gekennzeichnet, dass** die Motive des ersten Sicherheitsmerkmals (5) und des zweiten Sicherheitsmerkmals (6) mit unterschiedlicher Farbwirkung in Erscheinung treten.

5. Sicherheitselement nach einem der Ansprüche 1 bis 4, **dadurch gekennzeichnet, dass** die Mikroreflektoren des ersten und zweiten Sicherheitsmerkmals (65,66; 75, 76; 851, 86) auf unterschiedlichen Höhenstufen vorliegen, vorzugsweise
- als Teilreliefstrukturen (67, 68) auf unterschiedlichen Höhenstufen in einer Reliefstruktur (61), oder
- als eigenständige Reliefstrukturen (71, 72; 81, 82) auf unterschiedlichen Höhenstufen.

6. Sicherheitselement nach einem der Ansprüche 1 bis 5, **dadurch gekennzeichnet, dass** über einer reflektionserhöhenden Beschichtung (831, 841) der Mikroreflektoren des ersten und/oder des zweiten Sicherheitsmerkmals (851,852,861, 862) eine entsprechende erste bzw. zweite farbgebende Schicht (78; 88; 832), insbesondere eine lasierende Farbschicht, vorliegt.

7. Sicherheitselement nach einem der Ansprüche 1 bis 6, **dadurch gekennzeichnet, dass** eine reflektionserhöhende Beschichtung der Mikroreflektoren eine farbgebende Subwellenlängenstruktur umfasst und/oder eine Eigenfarbe aufweist.

8. Sicherheitselement nach einem der Ansprüche 1 bis 7, **dadurch gekennzeichnet, dass** die Mikroreflektoren eine Größe zwischen 1 bis 60 µm aufweisen, bevorzugt 3 bis 30 µm aufweisen, und/oder die Mikroreflektoren jeweils gebildet sind durch einen Mikrospiegel mit einer gerichteten, vorzugsweise planen, Oberfläche, durch eine gerichtet reflektierende Fresnelstruktur, durch eine Beugungsstruktur oder durch eine Subwellenlängenstruktur.

9. Sicherheitselement nach einem der Ansprüche 1 bis 8, **dadurch gekennzeichnet, dass** die Mikroreflektoren der Sicherheitsmerkmale (35, 36; 45, 46) in einer Mikrospiegelanordnung (32; 42) vorliegen, wobei
- die Mikroreflektoren der Sicherheitsmerkmale (35, 36; 45, 46) zumindest im ersten Flächenbereich ineinander verschachtelt vorliegen; und/oder
- in einem Pixel (39; 49) der Mikrospiegelanordnung (32; 42) sowohl unterschiedlich ausgerichtete als auch gleich ausgerichtet Mikrospiegel vorliegen; und/oder
- die Ausrichtung der Mikroreflektoren in der Mikrospiegelanordnung ist - auch für benachbarte Mikroreflektoren - vorab frei wählbar; und/oder
- die Mikroreflektoren in der Mikrospiegelanordnung in einem Raster oder quasizufällig angeordnet sind.

10. Sicherheitselement nach einem der Ansprüche 1 bis 9, **dadurch gekennzeichnet, dass**
die Mikroreflektoren des ersten Sicherheitsmerkmals einheitlich ausgerichtet sind; oder
die Mikroreflektoren des ersten Sicherheitsmerkmals für die Kipprichtung einen im Wesentlichen einheitlichen Neigungswinkel aber unterschiedliche Azimutwinkel aufweisen, so dass das erste Sicherheitsmerkmal für den Betrachter dreidimensional, insbesondere gewölbt, erscheint.

11. Sicherheitselement nach einem der Ansprüche 1 bis 10, **dadurch gekennzeichnet, dass** in gerichtetem Licht die beiden Motive der Sicherheitsmerkmale in den genannten Kippwinkelbereichen hell reflektierend sichtbar sind, insbesondere vor einem dunklen - unter dem jeweiligen Winkel nicht reflektierenden - Hintergrund, und/oder in gerichtetem Licht die beiden Motive der Sicherheitsmerkmale eine vergleichbare Konturschärfe aufweisen.

12. Sicherheitselement nach einem der Ansprüche 1 bis 11, **dadurch gekennzeichnet, dass** das Sicherheitselement ein weiteres erstes Sicherheitsmerkmal (94) aufweist, welches nur in einem weiteren ersten Betrachtungswinkelbereich (940) in einem weiteren ersten Flächenbereich sichtbar ist.

13. Sicherheitselement nach einem der Ansprüche 1 bis 12, **dadurch gekennzeichnet, dass** das bewegte Motiv des zweiten Sicherheitsmerkmals ein linienartiges Motiv ist und/oder das unbewegte Motiv des ersten Sicherheitsmerkmals durch den ersten Flächenbereich als Motiv gebildet wird, wobei das linienartige Motiv des zweiten Sicherheitsmerkmals (96) sich vorzugsweise bei der Bewegung in seiner Größe und/oder Form ändert.

14. Wertdokument mit einem Sicherheitselement nach einem der Ansprüche 1 bis 13, welches in ein Wertdokumentsubstrat eingebracht ist oder auf das Wertdokumentsubstrat aufgebracht ist.

## Claims

1. Optically variable security element (2) having a first and a second security feature (5, 6), wherein
- microreflectors (55; 65; 75; 851) of the first security feature (5) are oriented in such a way that, when the security element is tilted about a predefined axis, a motif of the first security feature (5) is visible to the observer only in a first tilt angle range (250; 950),
wherein the motif of the first security feature (5) becomes visible in a first surface region;
- microreflectors (56; 66; 76; 86) of the second security feature (6) are oriented in such a way that, when the security element is tilted about the predefined axis, a motif of the second security feature (6) is visible to the observer in a second tilt angle range (260; 960),
wherein the second tilt angle range (260; 960) comprises the first tilt angle range (250; 950), and
wherein during the tilting the motif of the second security feature (6) moves over a second surface region which at least partially overlaps the first surface region;
**characterized in that**
the second tilt angle range (260; 960) is significantly greater than the first tilt angle range (250; 950), preferably is at least four times the size, and
in diffuse light the motif of the first security feature (5) has a visibly increased contour sharpness in comparison to the motif of the second security feature (6), wherein the contour sharpness is a measure for the perceptibility of the position of the contour of the security feature for the observer.

2. Security element according to Claim 1, **characterized in that** between the first tilt angle range (250, 950) and a regional tilt angle (266, 966) at which the motif of the second security feature (6) lies in the first surface region there is a tilt angle distance (255, 955) which is at least three times the size of the first tilt angle range (250, 950).

3. Security element according to Claim 1 or 2, **characterized in that** adjoining the first surface region there is a surrounding region which, in a movement direction of the motif of the second security feature (6), is at least half the size - lying in the movement direction - of the first surface region, wherein all the microreflectors in the surrounding region are not oriented for the first tilt angle range (250, 950) and preferably also not for a first tilt angle range which is tripled in size.

4. Security element according to one of Claims 1 to 3, **characterized in that** the motifs of the first security feature (5) and of the second security feature (6) appear with different colour effects.

5. Security element according to one of Claims 1 to 4, **characterized in that** the microreflectors of the first and second security feature (65, 66; 75, 76; 851, 86) are at different heights, preferably
- as partial relief structures (67, 68) at different heights in a relief structure (61), or
- as independent relief structures (71, 72; 81, 82) at different heights.

6. Security element according to one of Claims 1 to 5, **characterized in that** above a reflection-increasing coating (831, 841) of the microreflectors of the first and/or of the second security feature (851, 852, 861, 862) there is a corresponding first and/or second colour-imparting layer (78; 88; 832), in particular a translucent colour layer.

7. Security element according to one of Claims 1 to 6, **characterized in that** a reflection-increasing coating of the microreflectors has a colour-imparting sub-wavelength structure and/or an intrinsic colour.

8. Security element according to one of Claims 1 to 7, **characterized in that** the microreflectors have a size of between 1 to 60 µm, preferably 3 to 30 µm, and/or the microreflectors are each formed by a micromirror with a directional, preferably planar, surface, by a directionally reflective Fresnel structure, by a diffraction structure or by a sub-wavelength structure.

9. Security element according to one of Claims 1 to 8, **characterized in that** the microreflectors of the security features (35, 36; 45, 46) are in a micromirror arrangement (32; 42), wherein
- the microreflectors of the security features (35, 36; 45, 46) are interleaved in one another at least in the first surface region; and/or
- in a pixel (39; 49) of the micromirror arrangement (32; 42) there are both differently oriented and identically oriented micromirrors; and/or
- the orientation of the microreflectors in the micromirror arrangement is - even for adjacent microreflectors - freely selectable in advance; and/or
- the microreflectors in the micromirror arrangement are arranged in a pattern or quasi-randomly.

10. Security element according to one of Claims 1 to 9,
**characterized in that**
the microreflectors of the first security feature are uniformly oriented; or
the microreflectors of the first security feature have, for the tilting direction, a substantially uniform angle of inclination but different azimuth angles, with the result that the first security feature appears three-dimensional, in particular curved, to the observer.

11. Security element according to one of Claims 1 to 10, **characterized in that** in directional light the two motifs of the security features are visible in brightly reflective form in the mentioned tilt angle ranges, in particular against a dark background - which is not reflective at the respective angle -, and/or in directional light the two motifs of the security features have a comparable contour sharpness.

12. Security element according to one of Claims 1 to 11, **characterized in that** the security element has a further first security feature (94) which is visible only in a further first viewing angle range (940) in a further first surface region.

13. Security element according to one of Claims 1 to 12, **characterized in that** the moving motif of the second security feature is a linear motif and/or the non-moving motif of the first security feature is formed by the first surface region as motif, wherein the linear motif of the second security feature (96) preferably changes in terms of its size and/or shape during the movement.

14. Value document having a security element according to one of Claims 1 to 13 which is introduced into a value document substrate or is applied to the value document substrate.

## Revendications

1. Élément de sécurité optiquement variable (2) comprenant une première et une deuxième caractéristique de sécurité (5, 6),
- des micro-réflecteurs (55 ; 65 ; 75 ; 851) de première caractéristique de sécurité (5) étant orientés de telle sorte que, lorsque l'élément de sécurité est incliné autour d'un axe spécifié, un motif de la première caractéristique de sécurité (5) soit visible par l'observateur uniquement dans une première plage d'angles d'inclinaison (250 ; 950),
le motif de la première caractéristique de sécurité (5) devenant visible dans une première zone de surface ;
- des micro-réflecteurs (56 ; 66 ; 76 ; 86) de la deuxième caractéristique de sécurité (6) étant orientés de telle sorte que, lorsque l'élément de sécurité est incliné autour de l'axe spécifié, un motif de la deuxième caractéristique de sécurité (6) soit visible par l'observateur dans une deuxième plage d'angles d'inclinaison (260 ; 960),
la deuxième plage d'angles d'inclinaison (260 ; 960) incluant la première plage d'angles d'inclinaison (250 ; 950), et
le motif de la deuxième caractéristique de sécurité (6) se déplaçant, lorsqu'il est incliné, sur une deuxième zone de surface, qui chevauche au moins partiellement la première zone de surface ;
**caractérisé en ce que**
la deuxième plage d'angles d'inclinaison (260 ; 960) est nettement plus grande que la première plage d'angles d'inclinaison (250 ; 950), de préférence au moins quatre fois plus grande et, en lumière diffuse, le motif de la première caractéristique de sécurité (5) présente, par rapport au motif de la deuxième caractéristique de sécurité (6), une netteté de contour visiblement accrue, la netteté de contour étant une mesure de la capacité de l'observateur à reconnaître la position du contour de la caractéristique de sécurité.

2. Élément de sécurité selon la revendication 1, **caractérisé en ce qu'**entre la première plage d'angles d'inclinaison (250, 950) et un angle d'inclinaison de zone (266, 966), dans lequel le motif de la deuxième caractéristique de sécurité (6) se trouve dans la première zone de surface, est ménagé un intervalle d'angle d'inclinaison (255, 955) qui a au moins trois fois la taille de la première plage d'angles d'inclinaison (250, 950).

3. Élément de sécurité selon la revendication 1 ou 2, **caractérisé en ce qu'**une zone environnante est située de manière adjacente à la première zone de surface, laquelle zone environnante a, dans une direction de mouvement du motif de la deuxième caractéristique de sécurité (6), au moins la moitié de la taille de la première zone de surface située dans la direction de mouvement, tous les micro-réflecteurs de la zone environnante n'étant pas orientés pour la première plage d'angles d'inclinaison (250, 950) et de préférence n'étant pas non plus orientés pour une première plage d'angles d'inclinaison de taille triple.

4. Élément de sécurité selon l'une des revendications 1 à 3, **caractérisé en ce que** les motifs de la première caractéristique de sécurité (5) et de la deuxième caractéristique de sécurité (6) apparaissent avec des effets de couleurs différents.

5. Élément de sécurité selon l'une des revendications 1 à 4, **caractérisé en ce que** les micro-réflecteurs des première et deuxième caractéristiques de sécurité (65, 66 ; 75, 76 ; 851, 86) sont présents à différents niveaux en hauteur, de préférence
- sous la forme de structures en relief partielles (67, 68) à différents niveaux en hauteur dans une structure en relief (61), ou
- sous la forme de structures en relief indépendantes (71, 72 ; 81, 82) à différents niveau en hauteur.

6. Élément de sécurité selon l'une des revendications 1 à 5, **caractérisé en ce qu'**une première ou deuxième couche colorante (78 ; 88 ; 832) correspondante, notamment une couche de couleur translucide, est présente sur un revêtement d'augmentation de réflexion (831, 834) des micro-réflecteurs des première et/ou deuxième caractéristiques de sécurité (851, 852, 861, 862).

7. Élément de sécurité selon l'une des revendications 1 à 6, **caractérisé en ce qu'**un revêtement d'augmentation de réflexion des micro-réflecteurs comprend une structure de sous-longueur d'onde colorante et/ou présente une couleur propre.

8. Élément de sécurité selon l'une des revendications 1 à 7, **caractérisé en ce que** les micro-réflecteurs ont une taille comprise entre 1 à 60 µm, de préférence 3 à 30 µm, et/ou les micro-réflecteurs sont formés chacun par un micro-miroir à surface orientée, de préférence plane, par une structure de Fresnel à réflexion orientée, par une structure de diffraction ou par une structure de sous-longueur d'onde.

9. Élément de sécurité selon l'une des revendications 1 à 8, **caractérisé en ce que** les micro-réflecteurs des caractéristiques de sécurité (35, 36 ; 45, 46) sont présents dans un ensemble de micro-miroirs (32 ; 42),
- les micro-réflecteurs des caractéristiques de sécurité (35, 36 ; 45, 46) sont emboîtés les uns dans les autres au moins dans la première zone de surface ; et/ou
- aussi bien des micro-miroirs d'orientations différentes que des micro-miroirs de même orientation sont présents dans un pixel (39 ; 49) de l'ensemble de micro-miroirs (32 ; 42) ; et/ou
- l'orientation des micro-réflecteurs dans l'ensemble de micro-miroirs peut également être librement choisie à l'avance pour les micro-réflecteurs voisins ; et/ou
- les micro-réflecteurs de l'ensemble de micro-miroirs sont disposés suivant une trame ou de manière quasi aléatoire.

10. Élément de sécurité selon l'une des revendications 1 à 9, **caractérisé en ce que**
les micro-réflecteurs de la première caractéristique de sécurité sont orientés de manière uniforme ; ou
les micro-réflecteurs de la première caractéristique de sécurité présentent un angle d'inclinaison sensiblement uniforme, mais des angles d'azimut différents, pour la direction d'inclinaison de sorte que la première caractéristique de sécurité apparaisse tridimensionnelle, notamment courbée, à l'observateur.

11. Élément de sécurité selon l'une des revendications 1 à 10, **caractérisé en ce que**, en lumière dirigée, les deux motifs des caractéristiques de sécurité sont visibles de manière réfléchissante en clair dans les plages d'angle d'inclinaison mentionnées, notamment sur un fond sombre qui est non réfléchissant sous l'angle respectif et/ou, en lumière dirigée, les deux motifs des caractéristiques de sécurité présentent une netteté de contour comparable.

12. Élément de sécurité selon l'une des revendications 1 à 11, **caractérisé en ce que** l'élément de sécurité comporte une autre première caractéristique de sécurité (94), qui n'est visible que dans une autre première plage d'angles d'observation (940) dans une autre première zone de surface.

13. Élément de sécurité selon l'une des revendications 1 à 12, **caractérisé en ce que** le motif déplacé de la deuxième caractéristique de sécurité est un motif en forme de ligne et/ou le motif non déplacé de la première caractéristique de sécurité est formé par la première zone de surface en tant que motif, le motif en forme de ligne de la deuxième caractéristique de sécurité (96) changeant de préférence de taille et/ou de forme pendant le mouvement.

14. Document de valeur comprenant un élément de sécurité selon l'une des revendications 1 à 13, qui est introduit dans un substrat de document de valeur ou qui est appliqué sur le substrat de document de valeur.
